# EUROPEAN PATENT APPLICATION

(11) **EP 4 641 189 A1**
(43) Date of publication of application: **29.10.2025**
(21) Application number: 23918455.9
(22) Date of filing: 27.06.2023
(51) Int. Cl.: G01N 27/327, G01N 27/416

(54) **ENZYME ELECTRODE, METHOD FOR MANUFACTURING SAME, AND ENZYME SENSOR**

(30) Priority: 27.01.2023 JP 2023010794
(71) Applicant: Kikkoman Corporation, Noda-shi, Chiba 278-8601 (JP)
(72) Inventor: SUZUKI Ryota, Noda-shi, Chiba 278-8601 (JP); MASAKARI Yosuke, Noda-shi, Chiba 278-8601 (JP)
(74) Representative: Mewburn Ellis LLP
(86) International application number: PCT/JP2023/023871
(87) International publication number: WO 2024/157495

(57) **Abstract**

Disclosed is a method for manufacturing an enzyme electrode. This method for manufacturing an enzyme electrode includes preparing a multilayer body including an electrode and a mediator layer provided on a surface of the electrode and containing a mediator crosslinked by a crosslinking agent, and forming a reaction layer by adding a solution containing an enzyme to the mediator layer of the multilayer body.

## Description

### Technical Field

The present disclosure relates to an enzyme electrode, a method for manufacturing the same, and an enzyme sensor.

### Background Art

An enzyme electrode is an electrode in which an enzyme as a catalyst for allowing a chemical reaction (metabolism) to proceed in a living body is immobilized on a surface of the electrode. Use of the enzyme electrode allows only a specific reaction to selectively proceed on the electrode due to the substrate specificity of the enzyme, and can convert a change in a substance due to the reaction into an electrical signal by the electrode. The enzyme electrode is used for an electrode of a biobattery, a biosensor, or the like. The enzyme electrode usually includes a reaction layer containing an enzyme, a mediator, and the like.

The mediator is a compound having a redox activity to mediate electron transfer between an enzyme and an electrode. Therefore, when detachment of the mediator occurs in the reaction layer of the enzyme electrode, a defect such as a decrease in output of the enzyme electrode may occur.

As one of the methods for preventing detachment of a mediator, for example, a method using a redox polymer in which a hydrophilic polymer arm containing a mediator is bonded to a hydrophobic polymer main chain and the redox polymer is used as the mediator is known (for example, Patent Literature 1 or the like).

### Citation List

### Patent Literature

Patent Literature 1: JP 2006-078468 A

### Summary of Invention

### Technical Problem

However, in a conventional enzyme electrode, polymer design for preventing detachment of a mediator is complicated, and a technique capable of more easily preventing detachment of a mediator has been required.

Therefore, a main object of the present disclosure is to provide a method for manufacturing an enzyme electrode capable of preventing detachment of a mediator from a reaction layer by a simpler design than the conventional one.

### Solution to Problem

The present inventors have extensively conducted studies for achieving the above-mentioned object, and resultantly found that when a mediator is crosslinked by a crosslinking agent, detachment from a reaction layer is prevented, and thus completed the invention of the present disclosure. In the conventional redox polymer, a linker (crosslinking group) having a certain length is disposed between the hydrophobic polymer and the mediator, so that the mediator is designed to easily enter the active center of the enzyme. This is because a coenzyme of the enzyme and the mediator need to approach each other in order for the mediator to exchange electrons with the enzyme. Therefore, when the mediator itself is polymerized, the polymeric body of the mediator hardly enters the active center of the enzyme, and a sufficient electrical signal cannot sometimes be obtained. According to the study by the present inventors, it was verified that a sufficient electrical signal can be obtained in an electrode containing a mediator crosslinked by a crosslinking agent. From this, it can be presumed that when a mediator crosslinked by a crosslinking agent is used, the mediator can sufficiently enter the active center of the enzyme.

The present disclosure provides methods for manufacturing enzyme electrodes of [1] to [4], enzyme electrodes of [5] to [7], and an enzyme sensor of [8].
[1] A method for manufacturing an enzyme electrode, including:
   preparing a multilayer body including an electrode and a mediator layer provided on a surface of the electrode and containing a mediator crosslinked by a crosslinking agent; and
   forming a reaction layer by adding a solution containing an enzyme to the mediator layer of the multilayer body.
[2] The method for manufacturing an enzyme electrode according to [1], in which
   the multilayer body is a multilayer body fabricated by disposing a mediator crosslinked by the crosslinking agent synthesized in advance on a surface of the electrode.
[3] The method for manufacturing an enzyme electrode according to [1] or [2], in which
   the mediator is a compound having two or more amino groups in one molecule.
[4] The method for manufacturing an enzyme electrode according to [3], in which
   the crosslinking agent is a compound having two or more reactive groups having reactivity with the amino groups in one molecule.
[5] An enzyme electrode, including:
   an electrode; and
   a reaction layer provided on a surface of the electrode, in which
   the reaction layer contains an enzyme and a mediator crosslinked by a crosslinking agent.
[6] The enzyme electrode according to [5], in which
   the mediator is a compound having two or more amino groups in one molecule.
[7] The enzyme electrode according to [6], in which
   the crosslinking agent is a compound having two or more reactive groups having reactivity with the amino groups in one molecule.
[8] An enzyme sensor, including:
   the enzyme electrode according to any one of [5] to [7] as a working electrode.

### Advantageous Effects of Invention

According to the present disclosure, an enzyme electrode capable of preventing detachment of a mediator from a reaction layer by a simpler design than the conventional one, and a method for manufacturing the same are provided. Further, according to the present disclosure, an enzyme sensor having such an enzyme electrode as a working electrode is provided.

### Brief Description of Drawings

FIG. 1 is a graph showing results of chronoamperometry measurement of a GDH electrode of Example 1.
FIG. 2 shows respective sequences of SEQ ID NO: 1 and SEQ ID NO: 2.

### Description of Embodiments

Hereinafter, embodiments of the present disclosure will be described in detail. However, the present disclosure is not limited to the following embodiments.

In the present description, a numerical range indicated using "to" indicates a range including numerical values described before and after "to" as a minimum value and a maximum value, respectively. In numerical ranges described in stages in the present description, the upper limit value or the lower limit value of a numerical range in a certain stage may be replaced with the upper limit value or the lower limit value of a numerical range in another stage. In addition, in a numerical range described in the present description, the upper limit value or the lower limit value of the numerical range may be replaced with a value shown in examples.

In the present description, unless otherwise specified, as for a material exemplified below, one type may be used alone or two or more types may be used in combination as long as conditions are met. Unless otherwise specified, when there are a plurality of substances corresponding to each component, the content of each component means the total amount of the plurality of substances.

### [Enzyme Electrode]

The enzyme electrode of the present embodiment includes an electrode and a reaction layer provided on a surface of the electrode. The enzyme electrode may further include a protective film layer provided so as to cover the reaction layer.

### <Electrode (Working Electrode)>

As the electrode, any known electrode used in the art can be used. Examples of the electrode include carbon electrodes; and metal electrodes of Pt, Au, Ag, Ni, and Pd. These electrodes may further contain, as an electrically conductive material, metal fine particles containing at least one element selected from the group consisting of Co, Pd, Rh, Ir, Ru, Os, Re, Ni, Cr, Fe, Mo, Ti, Al, Cu, V, Nb, Zr, Sn, In, Ga, Mg, Pb, Au, Pt, and Ag. These metal fine particles may be of an alloy or be plated. The electrode may be, for example, a carbon electrode. Examples of the constituent material of the carbon electrode include pyrolytic graphite (PG), glassy carbon (GC), a carbon paste, and plastic formed carbon (PFC).

### <Insulating Substrate>

The enzyme electrode may further include an insulating substrate, and the electrode may be formed on the insulating substrate. Examples of the constituent material of the insulating substrate include thermoplastic resins such as polyetherimide (PEI), polyethylene terephthalate (PET), and polyethylene (PE); resins (plastics) such as a polyimide resin and an epoxy resin; insulating materials such as glass, ceramic, and paper.

### <Reaction Layer>

The reaction layer includes an enzyme and a mediator crosslinked by a crosslinking agent (hereinafter, sometimes referred to as a "crosslinked mediator"). The reaction layer may further contain, for example, a polyelectrolyte.

### (Enzyme)

The enzyme is not particularly limited as long as it has substrate specificity for the analyte. Examples of the enzyme include various oxidoreductases classified as EC 1. More specific examples thereof include dehydrogenases, oxidases, and reductases. Examples of the dehydrogenases include glucose dehydrogenase, alcohol dehydrogenase, glutamate dehydrogenase, cholesterol dehydrogenase, aldehyde dehydrogenase, fructose dehydrogenase, sorbitol dehydrogenase, D- and L-lactate dehydrogenase, malate dehydrogenase, glycerol dehydrogenase, D- and L-amino acid dehydrogenase, glyceraldehyde 3-phosphate dehydrogenase, 3-hydroxysteroid dehydrogenase, pyranose dehydrogenase, formate dehydrogenase, phosphate dehydrogenase, and diaphorase. Examples of the oxidases include glucose oxidase, galactose oxidase, pyruvate oxidase, D- and L-amino acid oxidase, amine oxidase, cholesterol oxidase, choline oxidase, bilirubin oxidase, xanthine oxidase, sarcosine oxidase, D- and L-lactic acid oxidase, ascorbate oxidase, cytochrome oxidase, NADH (nicotinamide adenine dinucleotide) oxidase, pyranose oxidase, polyamine oxidase, amadoriase (also referred to as fructosyl peptide oxidase or fructosyl amino acid oxidase), peroxidase, and laccase. Examples of the reductases include catalase, glutathione reductase, cytochrome b5 reductase, adrenodoxin reductase, and nitrate reductase.

The enzyme may be, for example, at least one selected from the group consisting of a dehydrogenase, an oxidase, and a reductase, and may be at least one selected from the group consisting of a dehydrogenase and an oxidase. In one embodiment, the enzyme may be a dehydrogenase, and may be a glucose dehydrogenase (GDH) or a lactate dehydrogenase (LDH). In one embodiment, the enzyme may be an oxidase, and may be a lactate oxidase (LOX) or a NADH oxidase (NOX).

Examples of the coenzyme of the enzyme include nicotinamide adenine dinucleotide (NAD), nicotinamide adenine dinucleotide phosphate (NADP), flavin adenine dinucleotide (FAD), flavin mononucleotide (FMN), and pyrroloquinoline quinone (PQQ). Examples of the glucose dehydrogenase (GDH) having a coenzyme include FAD-dependent GDH, NAD-dependent GDH, NADP-dependent GDH, and PQQ-dependent GDH. The coenzyme may be, for example, flavin adenine dinucleotide (FAD) or flavin mononucleotide (FMN), and the enzyme may be, for example, a flavin enzyme having the coenzyme.

These oxidoreductases can be measured for activity using various substrates by, for example, the method described in Methods in Enzymology (Vol. 1-602).

The content of the enzyme contained in the reaction layer may be 0.001 U or more, 0.01 U or more, 0.1 U or more, 1 U or more, or 10 U or more, and may be 10 kU or less, 1 kU or less, or 500 U or less per square centimeter of the area of the electrode (working electrode) based on the total amount of the reaction layer. These numerical values are numerical values when the effective area of the area of the electrode (working electrode) is taken as 1 cm². When carbon nanotube, graphene, or the like having a large specific surface area is used, the effective area may increase although the geometric area does not change. Hereinafter, the content per square centimeter of the area of the electrode (working electrode) is the same.

### (Crosslinked Mediator)

The crosslinked mediator is a mediator that is crosslinked by a crosslinking agent. The crosslinked mediator can also be referred to as a reaction product of a mediator and a crosslinking agent. It is presumed that crosslinking of a mediator with a crosslinking agent decreases the solubility in an aqueous solution, further improves the hydrophobicity, and further enhances the hydrophobic interaction with the electrode, so that detachment of the mediator from the reaction layer can be prevented.

### · Mediator

The mediator can be used without particular limitation as long as it is a compound having a redox activity of mediating electron transfer between the enzyme and the electrode and having two or more functional groups capable of forming a crosslinked structure by reacting with a reactive group of a crosslinking agent described later in one molecule. The mediator may be a neutral molecule having no ionicity, or may be a salt formed of a cation and an anion. These may be acid addition salts or solvates. The salt is not particularly limited, and examples thereof include a Na salt, a K salt, a Cl salt, and a Br salt. The acid addition salt is not particularly limited, and examples thereof include an acetate, a hydrochloride, a sulfate, a sulfite, and a nitrate.

Examples of the functional group include an amino group and a thiol group. Among these, the functional group may be an amino group. The number of functional groups may be, in one molecule, 2 or more, and may be 10 or less, 8 or less, 6 or less, or 4 or less, or may be 2. The mediator may be, for example, a compound having two functional groups in one molecule.

The mediator may be, for example, a compound having two or more amino groups in one molecule. The number of amino groups may be, in one molecule, 10 or less, 8 or less, 6 or less, or 4 or less, or may be 2. The mediator may be, for example, a compound having two amino groups in one molecule.

The compound having two or more amino groups in one molecule may be a compound in which an amino group does not contribute to the redox reaction, and may be, for example, a compound which exhibits a redox potential when a compound obtained by substituting the amino group of the compound with a hydrogen atom is assumed. In the crosslinked mediator, an amino group and a reactive group react to form a crosslinked structure. Therefore, use of such a compound as the mediator may allow the resulting crosslinked mediator to sufficiently exhibit a redox activity.

The molecular weight of the mediator may be, for example, 100 or more, 150 or more, or 200 or more, and may be 1000 or less, 700 or less, or 500 or less.

The content of the mediator contained in the reaction layer may be 0.1 pmol or more, 0.2 pmol or more, 0.3 pmol or more, 0.4 pmol or more, 0.5 pmol or more, or 1 pmol or more, and may be 10 mmol or less, 5 mmol or less, 1 mmol or less, 800 µmol or less, 600 µmol or less, 500 µmol or less, 400 µmol or less, 300 µmol or less, 200 µmol or less, 100 µmol or less, or 50 µmol or less when calculated in terms of mediator monomolecule before crosslinking, per square centimeter of the area of the electrode (working electrode). The content of the mediator contained in the reaction layer may be, for example, 0.1 pmol to 10 mmol, 0.1 pmol to 5 mmol, 0.2 pmol to 1 mmol, 0.3 pmol to 800 µmol, 0.4 pmol to 600 µmol, 0.5 pmol to 500 µmol, 0.6 pmol to 400 µmol, 0.7 pmol to 300 µmol, 0.8 pmol to 200 µmol, 0.9 pmol to 100 µmol, or 1 pmol to 50 µmol per square centimeter of the area of the electrode (working electrode).

The mediator may be, for example, a compound represented by formula (1): H₂N-X-NH₂ (hereinafter sometimes referred to as "compound (1)"). In formula (1), X represents a divalent group.

The divalent group represented by X may be, for example, a divalent fused ring group containing a heteroatom as a constituent atom of the ring. The divalent fused ring group means a group obtained by removing two hydrogen atoms directly bonded to a carbon atom on a fused ring from a fused ring compound containing a heteroatom as a constituent atom of the ring. Examples of the heteroatoms include a nitrogen atom, an oxygen atom, and a sulfur atom. The fused ring group may be an aromatic fused ring group having aromaticity. When the fused ring group has aromaticity, the effect of π-π interaction can be expected, and detachment of the mediator can be further prevented. The fused ring group may be tricyclic or higher, and may be octacyclic or lower, hexacyclic or lower, or tetracyclic or lower. The fused ring group may be, for example, tricyclic.

The divalent group represented by X may be, for example, a group in which when a compound (H-X-H) having an amino group in the compound (1) substituted with a hydrogen atom is assumed, the assumed compound becomes a compound exhibiting a redox potential.

The mediator is preferably a compound having high hydrophobicity from the viewpoint of preventing detachment from the reaction layer. The divalent group represented by X may be, for example, a group in which LogP calculated for an assumed compound is 1.5 or more when a compound (H-X-H) in which an amino group in the compound (1) is substituted with a hydrogen atom is assumed. Note that LogP means a partition coefficient between water and octanol (1-octanol). A larger LogP means lower polarity and higher hydrophobicity. LogP may be, for example, 2.0 or more, 2.5 or more, or 3.0 or more.

In the present description, LogP means a value at 25°C calculated for the compound by software ChemDraw (Prime 6.01, manufactured by PerkinElmer, Inc.).

Specific examples of the mediator include a compound represented by the following formula (1-1) (thionine salt), a compound represented by the following formula (1-2) (acriflavine), and a compound represented by the following formula (1-3) (2,3-diaminophenazine). LogP calculated for a compound having an amino group substituted with a hydrogen atom is also shown below. The mediator may be, for example, one type selected from the group consisting of a compound represented by formula (1-1) (thionine salt), a compound represented by formula (1-2) (acriflavine), and a compound represented by formula (1-3) (2,3-diaminophenazine).

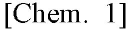

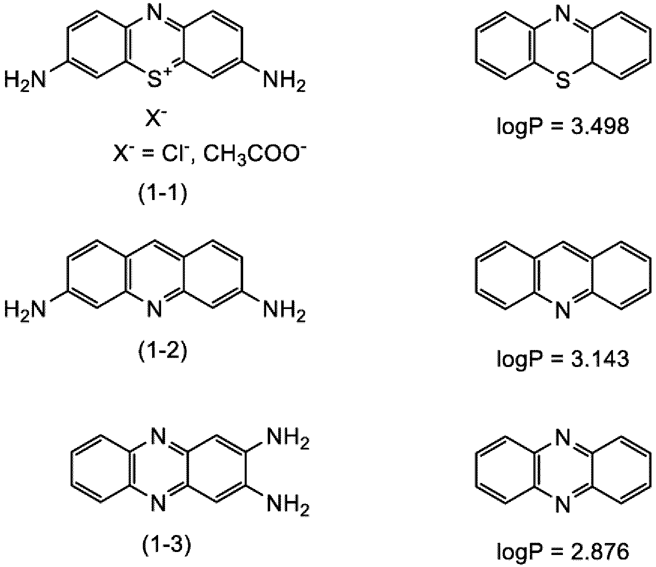

### · Crosslinking Agent

The crosslinking agent is not particularly limited as long as it is a compound having a reactive group capable of forming a crosslinked structure by reacting with a functional group (for example, an amino group or a thiol group) of the mediator.

The crosslinking agent may be, for example, a compound having two or more reactive groups having reactivity with a functional group in one molecule, or may be a compound having two or more reactive groups having reactivity with an amino group in one molecule. Examples of the reactive group include groups containing a cyclic ether group (such as an epoxy group, a glycidyl group, and a glycidyl ether group); a formyl group; a carboxyl group; an azido group; and an active ester group. Here, the active ester group means a group obtained by esterifying a carboxyl group with a condensing agent such as N-hydroxysuccinimide (NHS) or a triazine-based condensing agent (DMT-MM). The reactive group may be, for example, at least one selected from the group consisting of a group containing a cyclic ether group, a formyl group, and an active ester group. The number of reactive groups may be, in one molecule, 10 or less, 8 or less, 6 or less, or 4 or less, or may be 2. The crosslinking agent may be, for example, a compound having two reactive groups having reactivity with a functional group (amino group) in one molecule.

The molecular weight or number average molecular weight (Mn) of the crosslinking agent may be, for example, 25 or more, 50 or more, 100 or more, or 150 or more, and may be 100000 or less, 50000 or less, or 10000 or less. Here, the number average molecular weight (Mn) is a value converted using a calibration curve of polyethylene glycol (PEG)/polyethylene oxide (PEO) (standard substance) by gel permeation chromatography (GPC).

The crosslinking agent may be, for example, a compound represented by formula (2): Z-Y-Z. In formula (2), Y represents an alkylene group or a divalent group having a polyoxyalkylene chain, and Z represents a reactive group. The plurality of Z's may be identical or different.

The alkylene group may be, for example, a linear or branched alkylene group having 1 to 50 carbon atoms. The number of carbon atoms in the alkylene group may be 2 to 30 or 3 to 20. The alkylene group may be a linear alkylene group.

The divalent group having a polyoxyalkylene chain may be, for example, a group represented by formula (3): -O-(Y¹-O)ₙ₁-. In formula (3), Y¹ represents an alkylene group having 1 to 3 carbon atoms, and n1 represents an integer of 1 or more. n1 may be, for example, 2 or more, and may be 1000 or less or 500 or less.

### · Crosslinked Mediator

The crosslinked mediator can be obtained, for example, by allowing the amino group of the mediator to react with the reactive group of the crosslinking agent in the presence of a solvent. In the reaction of the mediator with the crosslinking agent, the ratio of the total number of moles of reactive groups of the crosslinking agent to the total number of moles of amino groups of the mediator (the total number of moles of reactive groups of the crosslinking agent/the total number of moles of amino groups of the mediator) may be, for example, 0.1 or more, 0.2 or more, 0.5 or more, 1.0 or more, 3.0 or more, 5.0 or more, 10 or more, or 15 or more, and may be 50 or less or 30 or less.

The solvent is not particularly limited as long as it dissolves the mediator and the crosslinking agent. Examples of the solvent include water; alcohols such as methanol, ethanol, and 2-propanol; aromatic hydrocarbons such as toluene and xylene; aliphatic hydrocarbons such as hexane, heptane, and octane; cycloaliphatic hydrocarbons such as cyclohexane and methylcyclohexane; ethers such as diethyl ether, di-n-propyl ether, diisopropyl ether, di-n-butyl ether, tert-butyl methyl ether, and tetrahydrofuran; ketones such as acetone, methyl ethyl ketone, methyl isobutyl ketone, and cyclohexanone; esters such as ethyl acetate, n-propyl acetate, isopropyl acetate, and n-butyl acetate; and mixtures thereof.

The solvent may contain, for example, another component such as a buffer for adjusting the pH of the reaction liquid. Examples of the buffer include potassium phosphate, MES (2-morpholinoethanesulfonic acid), HEPES (4-(2-hydroxyethyl)-1-piperazineethanesulfonic acid), Tris-HCl (tris(hydroxymethyl)aminomethane hydrochloride), acetic acid, and sodium acetate.

The reaction temperature at the time of allowing the mediator to react with the crosslinking agent may be, for example, 20 to 200°C, or may be 30°C or higher, 40°C or higher, 50°C or higher, or 60°C or higher, and may be 150°C or lower, 130°C or lower, 110°C or lower, or 100°C or lower. The reaction time at the time of allowing the mediator to react with the crosslinking agent may be, for example, 0.1 hours or more, 0.5 hours or more, or 1 hour or more. The upper limit of the reaction time is not particularly limited, but may be, for example, 72 hours or less.

In the crosslinked mediator, the ratio of the total number of moles of structural units derived from the crosslinking agent (for example, a compound having two reactive groups having reactivity with a functional group in one molecule) to the total number of moles of structural units derived from the mediator (for example, a compound having two functional groups in one molecule) (the total number of moles of structural units derived from the crosslinking agent/the total number of moles of structural units derived from the mediator) may be, for example, 0.80 or more, 0.90 or more, or 0.95 or more, and may be 1.20 or less, 1.10 or less, or 1.05 or less.

The number average molecular weight (Mn) of the crosslinked mediator may be, for example, 250 or more, 500 or more, 1000 or more, 2000 or more, 3000 or more, 4000 or more, 5000 or more, 6000 or more, 7000 or more, 8000 or more, 9000 or more, 10000 or more, 15000 or more, 20000 or more, 30000 or more, 50000 or more, 100000 or more, 200000 or more, 500000 or more, or 1000000 or more. The number average molecular weight (Mn) of the crosslinked mediator may be, for example, 10000000 or less or 5000000 or less. Here, the number average molecular weight (Mn) is a value converted using a calibration curve of polyethylene glycol (PEG)/polyethylene oxide (PEO) (standard substance) by gel permeation chromatography (GPC).

In the crosslinked mediator, the average number of units of a structural unit derived from one mediator (for example, a compound having two functional groups in one molecule) and one crosslinking agent (for example, a compound having two reactive groups having reactivity with a functional group in one molecule) (or a structural unit derived from a mediator) may be, for example, 3 units or more, 4 units or more, 5 units or more, 10 units or more, 15 units or more, 20 units or more, 30 units or more, 40 units or more, 50 units or more, 100 units or more, 1000 units or more, 10000 units or more, or 100000 units or more. The average number of units may be, for example, 1000 units or less or 500 units or less. Here, the average number of units can be calculated from the following formula (X).

Average number of units = [Number average molecular weight (Mn) of crosslinked mediator]/[Molecular weight of structural unit derived from one mediator and one crosslinking agent] (X)

In the crosslinked mediator, the maximum number of units of a structural unit derived from one mediator (for example, a compound having two functional groups in one molecule) and one crosslinking agent (for example, a compound having two reactive groups having reactivity with a functional group in one molecule) (or a structural unit derived from a mediator) may be, for example, 12 units or more, 16 units or more, 20 units or more, 40 units or more, 60 units or more, 80 units or more, 200 units or more, 400 units or more, 4000 units or more, 40000 units or more, or 400000 units or more. The maximum number of units may be, for example, 4000 units or less or 2000 units or less. Here, the maximum number of units can be calculated from the following formula (Y). The maximum molecular weight can be calculated by an approximation formula (cubic) obtained from the retention time of the peak start and the standard substance.

Maximum number of units = [Maximum molecular weight of crosslinked mediator]/[Molecular weight of structural unit derived from one mediator and one crosslinking agent] (Y)

Examples of the crosslinked mediator include a polymer having a structural unit represented by the following formula (A) , which is a condensation polymer of benzoquinone, formaldehyde, and piperazine hydrochloride. The crosslinked mediator preferably does not contain a polymer having a structural unit represented by formula (A).

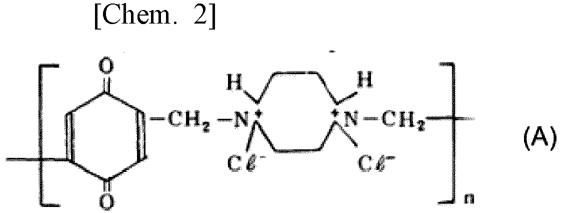

### (Polyelectrolyte)

The polyelectrolyte can be a component capable of forming a polyion complex containing an enzyme. The polyelectrolyte may be, for example, one (combination) formed of a cationic polymer and an anionic polymer. In the reaction layer, formation of the polyion complex containing an enzyme can prevent detachment of the enzyme. The polyelectrolyte may have a charge opposite to the surface charge of the enzyme.

The cationic polymer means a hydrophilic polymer having a cationic group in a constituent unit. Examples of the cationic polymer include polylysine, chitosan, polyethyleneimine, polyarginine, polyornithine, polyallylamine, polyvinylamine, and salts thereof. The anionic polymer means a hydrophilic polymer having an anionic group in a constituent unit. Examples of the anionic polymer include polystyrene sulfonate, polyglutamic acid, polyacrylic acid, polyaspartic acid, hyaluronic acid, polyglucuronic acid, carboxymethyl cellulose, and salts thereof.

Other examples of the polyelectrolyte include polymers selected from the group consisting of polypyrrole (PPY), polythiophene (PT), polyaniline (PANI), poly(p-phenylene sulfide) (PPS), poly(acetylene) (PAC), poly(p-phenylenevinylene) (PPV), poly(3,4-ethylenedioxythiophene) (PEDOT), poly(fluorene), polyphenylene, polypyrene, polyazulene, polynaphthalene, polycarbazole, polyindole, polyazepine, or functionalized derivatives, precursors, or salts thereof, and combinations thereof. The polyelectrolyte may be natural, non-natural, modified, or synthetic.

### <Other Components>

The reaction layer may contain other components. Examples of other components include an enzyme stabilizer (for example, organic acids such as malic acid, citric acid, and gluconic acid, amino acids such as lysine, arginine, glutamic acid, and glycine, saccharides such as trehalose, xylitol, sucrose, dextrin, and dextran, water-soluble polymers such as polylysine, polyethyleneimine, and polyacrylic acid, and proteins such as serum albumin), a dispersant (a phosphate buffer, a citrate buffer, a Good's buffer, and the like), a crosslinking agent (for example, aldehyde group-containing compounds such as glutaraldehyde and formaldehyde, carbodiimide group-containing compounds such as hexamethylene diisocyanate and hydrogenated xylylene diisocyanate, maleimide group-containing compounds such as m-maleimidobenzoyl-N-hydroxysuccinimide ester and sulfosuccinimidyl 4-(p-maleimidophenyl) butyrate, oxazoline group-containing compounds such as 2,2'-bis-(2-oxazoline) and 2,2'-methylene-bis-(2-oxazoline), and epoxy group-containing compounds such as rubitol polyglycidyl ether and polyglycerol polyglycidyl ether), a thickener (Natrosol TM, DEAE-Dextran hydrochloride, and the like), a film forming aid (an acetonitrile plasma polymerized film, hydrophilic polymers such as carboxymethylcellulose and methylcellulose, and amphiphilic polymers such as polyvinylpyrrolidone), a curing agent, an antifoaming agent, a preservative, a pH adjusting agent, and a surfactant (Triton X-100, sodium dodecyl sulfate, perfluorooctanesulfonic acid, sodium stearate, and the like).

### <Protective Film Layer>

The protective film layer prevents detachment of the enzyme, the crosslinked mediator, or the like contained in the reaction layer. In addition, since the analyte present outside the protective film layer needs to permeate into the protective film layer where the reaction layer is present, the protective film layer has pores through which the analyte can permeate. A material for forming the protective film may be a material which does not or hardly adsorb proteins, cells, or the like and has biocompatibility, or may be a biocompatible polymer. Examples of the biocompatible polymer include poly-4-vinylpyridine, a copolymer of methyl methacrylate and hydroxyethyl methacrylate, a copolymer of butyl methacrylate and hydroxyethyl methacrylate, poly(2-methacryloyloxyethyl phosphorylcholine-co-n-butyl methacrylate), polyurethane, and a zwitterionic polymer (see, for example, Japanese Unexamined Patent Publication No. 2019-84519 or Japanese Unexamined Patent Publication No. 2020-38059).

### [Method for Manufacturing Enzyme Electrode]

A method for manufacturing an enzyme electrode of the present embodiment includes preparing a multilayer body including an electrode and a mediator layer provided on a surface of the electrode and containing a crosslinked mediator (step (A)), and forming a reaction layer by adding a solution containing an enzyme to the mediator layer of the multilayer body (step (B)). The method for manufacturing an enzyme electrode may further include forming a protective film layer so as to cover the formed reaction layer (step (C)).

### <Step (A)>

In the step (A), a multilayer body including a predetermined electrode and a mediator layer is prepared. The mediator layer is a layer that can become a reaction layer by containing an enzyme. The multilayer body may be fabricated by disposing a previously synthesized crosslinked mediator on a surface of the electrode, or may be fabricated by allowing a crosslinking agent to react with a mediator on a surface of the electrode to synthesize a crosslinked mediator. The multilayer body may be a multilayer body fabricated by disposing a previously synthesized crosslinked mediator on a surface of the electrode. The synthesis conditions (reaction conditions) and the like for the crosslinked mediator may be similar to those described above.

The method of disposing the crosslinked mediator on the electrode may be, for example, a method including preparing a solution (or a dispersion) A containing the crosslinked mediator and a solvent, applying the prepared solution A, and removing at least a part of the solvent in the applied solution A. Examples of the solvent include solvents similar to those used in synthesizing the crosslinked mediator.

The method of applying the solution A is not particularly limited, and a conventionally known method can be applied. The application amount of the crosslinked mediator is appropriately adjusted to fall within a desired range in consideration of the concentration of the solution A and the like.

The method of removing at least a part of the solvent in the solution A is not particularly limited, and may be, for example, a method of drying at 4 to 100°C, preferably at 4 to 60°C, for 1 minute to 48 hours, preferably 5 minutes to 24 hours.

In this way, it is possible to obtain a multilayer body including an electrode and a mediator layer provided on a surface of the electrode and containing a crosslinked mediator. The electrode provided with the mediator layer may be washed with water as necessary. By washing the electrode provided with the mediator layer with water, it is possible to remove a low molecular weight mediator which is not sufficiently crosslinked from the mediator layer.

### <Step (B)>

In the step (B), a solution containing an enzyme is added to the mediator layer of the multilayer body to form a reaction layer containing the enzyme and the crosslinked mediator. The enzyme usually penetrates the mediator layer and can be fixed onto the electrode via the crosslinked mediator. The method of adding the solution containing an enzyme to the mediator layer may be, for example, a method including preparing a solution (or a dispersion) B containing an enzyme and a solvent, and applying the prepared solution B, and may be a method further including removing at least a part of the solvent in the applied solution B as necessary. Examples of the solvent include solvents similar to those used in synthesizing the crosslinked mediator.

The solution B may contain components other than the enzyme and the solvent. Examples of the component other than the enzyme and the solvent include other components in the reaction layer described above.

The method of applying the solution B is not particularly limited, and a conventionally known method can be applied. The application amount of the enzyme is appropriately adjusted to fall within a desired range in consideration of the concentration of the solution B and the like.

The method of removing at least a part of the solvent in the solution B is not particularly limited, and may be, for example, a method of drying at 4 to 60°C for 5 minutes to 24 hours.

After the solution containing an enzyme is added to the mediator layer of the multilayer body, if necessary, the enzyme may be immobilized by adding a solution containing a polyelectrolyte to the mediator layer and mixing the polyelectrolyte with the crosslinked mediator to form a polyion complex. The method of adding the solution containing a polyelectrolyte to the mediator layer may be, for example, a method including preparing a solution (or a dispersion) C containing a polyelectrolyte and a solvent, and applying the prepared solution C, and may be a method further including removing at least a part of the solvent in the applied solution C as necessary. Examples of the solvent include solvents similar to those used in synthesizing the crosslinked mediator.

The method of applying the solution C is not particularly limited, and a conventionally known method can be applied. The application amount of the polyelectrolyte is appropriately adjusted to fall within a desired range in consideration of the concentration of the solution C and the like.

The method of removing at least a part of the solvent in the solution C is not particularly limited, and may be, for example, a method of drying at 4 to 60°C for 1 minute to 24 hours.

In this way, it is possible to manufacture an enzyme electrode including an electrode and a reaction layer provided on a surface of the electrode, in which the reaction layer contains an enzyme and a mediator crosslinked by a crosslinking agent.

### <Step (C)>

In the step (C), a protective film layer is formed so as to cover the formed reaction layer. The method of forming the protective film layer is not particularly limited as long as the reaction layer is covered, and may be, for example, a method including preparing a solution containing a material for forming the protective film and a solvent, and immersing the formed reaction layer in the prepared solution.

### [Enzyme Sensor]

The enzyme sensor of the present embodiment has an enzyme electrode as a working electrode. Examples of an analyte for the enzyme sensor include glucose, a glucose derivative, lactic acid, pyruvic acid, cholesterol, theophylline, alcohol, glutamic acid, 3-hydroxybutyric acid, ketone, a ketone body, glutamine, creatinine, acetylcholine, cortisol, hydrogen peroxide, choline, glycerol, glycine, gluconic acid, sucrose, maltose, maltooligosaccharide, lactose, xylose, cellobiose, alditol, acetic acid, L-ascorbic acid, malic acid, lysine, ammonia, tyramine, histamine, arginine, alanine, phenylalanine, histidine, hypoxanthine, inosine, tryptophan, threonine, alanylglutamine, kynurenine, glycosylated amino acid, glycosylated peptide, and glycosylated protein.

Hereinafter, the present disclosure will be specifically described with reference to examples, but the present disclosure is not limited to these examples.

### [Fabrication of Enzyme Electrodes (GDH Electrodes)]

### Example 1

First, in order to crosslink thionine molecules, 37 µL of a thionine acetate solution (1.2 mg/mL) and 2 µL of a glutaraldehyde solution (15% (w/v)) each prepared using a 10 mM potassium phosphate buffer (pH 6.5) were mixed and allowed to react at 60°C for 1 hour. The reaction solution (3 µL) was applied onto a working electrode of a printed electrode, and dried. As the printed electrode, SCREEN-PRINTED ELECTRODES (DRP-C110 manufactured by Metrohm Corporation) on which a working electrode formed of carbon (12.6 mm²) and a reference electrode formed of silver were printed was used. Subsequently, 2 µL of a glucose dehydrogenase (GDH, manufactured by Kikkoman Biochemifa Company) solution (10 mg/mL) and 0.2 µL of a glutaraldehyde solution (1% (w/v)) each prepared using a 10 mM potassium phosphate buffer (pH 6.5) were mixed, and the mixture was applied onto the working electrode and dried. After drying, washing was performed with ultrapure water to remove thionine which was not sufficiently crosslinked. Subsequently, the printed electrode was immersed in poly-4-vinylpyridine dissolved in ethanol and pulled up, and after 10 minutes, the printed electrode was immersed again and pulled up to form a protective film layer, thereby fabricating a GDH electrode of Example 1 including a working electrode, a reaction layer, and a protective film layer.

### Comparative Example 1-1

A GDH electrode of Comparative Example 1-1 was fabricated in the same manner as in Example 1 except that 3 µL of a thionine acetate solution (1.2 mg/mL) was applied onto the working electrode of the printed electrode and dried without crosslinking thionine molecules.

### Comparative Example 1-2

A thionine acetate solution (2.5 mg/mL, 36 µL), a GDH solution (20 mg/mL, 5 µL), and a glutaraldehyde solution (15% (w/v), 2 µL) were mixed, thionine and GDH were crosslinked with a crosslinking agent, and 7 µL of the mixture was applied onto the working electrode of the printed electrode and dried. After drying for 20 hours, washing was performed with ultrapure water, and a protective film layer was formed in the same manner as in Example 1, thereby fabricating a GDH electrode of Comparative Example 1-2.

### [Evaluation of Enzyme Electrodes (GDH Electrodes)]

Evaluation was performed using the GDH electrodes of Example 1 and Comparative Example 1-1. In order to perform chronoamperometry measurement using printed electrode measurement, the printed electrode was connected to the ALS electrochemical analyzer 814D (manufactured by BAS) using a dedicated connector (DRP-CAC manufactured by Drop Sense). The measurement was performed in a three electrode system using a printed electrode as a working electrode, platinum as a counter electrode, and a silver-silver chloride electrode as a reference electrode, and 10 mL of PBS (phosphate buffered saline) was used as a buffer. Then, the applied voltage was set to +100 mV (vs. Ag/AgCl). Specifically, glucose was added every 60 seconds from 60 seconds after the start of measurement so that the concentration became 2 to 20 mM, and the current response value was continuously measured. After the measurement, the printed electrode was immersed in PBS and stored at 37°C. After a lapse of one week, the printed electrode was taken out, and the amount of thionine contained in PBS was measured. When the amount of thionine was quantified by measuring the absorbance at 600 nm using a spectrophotometer, 0.2 nmol of thionine was detected from the GDH electrode of Example 1, whereas 3.9 nmol of thionine was detected from the GDH electrode of Comparative Example 1-1, and it was found that the elution amount of thionine was significantly reduced by crosslinking thionine molecules.

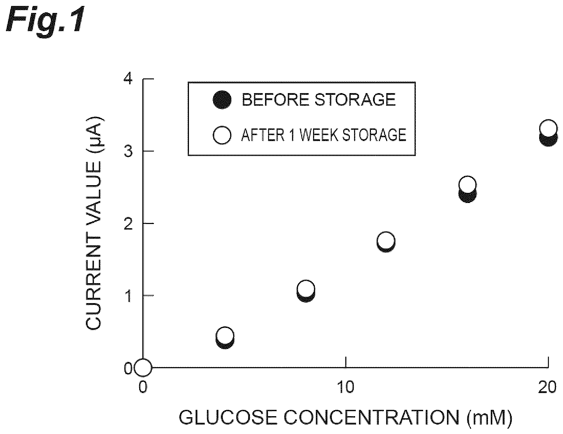

FIG. 1 is a graph showing results of chronoamperometry measurement of the GDH electrode of Example 1. The current value at each glucose concentration is a current value after background correction by subtracting the current value at a glucose concentration of 0 mM. In FIG. 1, a good linear relationship was observed between the glucose concentration and the current value in the glucose concentration range of 0 to 20 mM. Furthermore, before and after storage at 37°C for 1 week, the percentage of the current value at a glucose concentration of 20 mM was 104%, and the GDH electrode of Example 1 exhibited high durability (storage stability). From this, it was verified that the enzyme electrode of the present disclosure can prevent detachment of the mediator from the reaction layer.

The GDH electrode of Comparative Example 1-2 was also subjected to chronoamperometry measurement. As a result, the current value reached saturation at a glucose concentration of 6 mM or more. From this, when quantification is performed under such conditions, the glucose concentration range in which the glucose concentration and the measured value show an effective linear relationship is considered to be 6 mM or less. However, in consideration of practical needs for glucose measurement, for example, when considering glucose measurement during cell culture, the RPMI 1640 medium, which is often used as a medium, contains 2000 mg/dL (11.11 mM) of glucose. In consideration of this, in the measurement using the GDH electrode of Comparative Example 1-2, the concentration range of glucose that can be measured from the beginning was exceeded, and it was verified that the quantitative concentration range of glucose was practically insufficient.

After the above measurement, the printed electrode of the GDH electrode of Comparative Example 1-2 was immersed in PBS and stored at 37°C. After a lapse of one day, the printed electrode was taken out from PBS, and subjected to chronoamperometry measurement again in the same manner as in the previous day, and as a result, the percentage of the current value at a glucose concentration of 6 mM significantly decreased before and after storage at 37°C for 1 day. Specifically, when the measured value before storage at 37°C for 1 day was taken as 100%, the current value after storage for 1 day decreased to only 2.3%. From this, it was verified that the GDH electrode of Comparative Example 1-2 had insufficient durability (storage stability).

### [Fabrication of Enzyme Electrodes (LDH Electrodes) Formed Using Various Mediators]

### Example 2-1

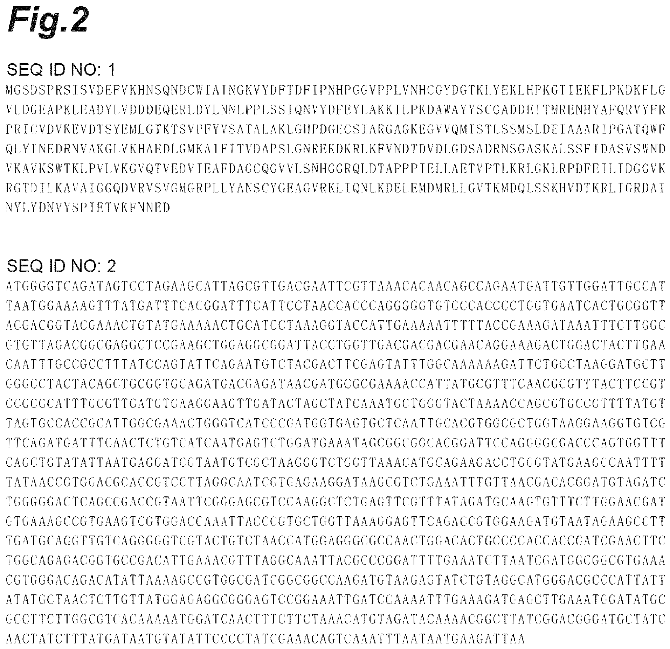

A 1503-bp gene (including a stop codon TAA) represented by SEQ ID NO: 2 encoding the amino acid sequence represented by SEQ ID NO: 1 was inserted into a multiple cloning site of a plasmid pKK223-3 by a conventional method to obtain a recombinant plasmid pKK223-3-LDH. FIG. 2 shows respective sequences of SEQ ID NO: 1 and SEQ ID NO: 2. Hereinafter, when simply referred to as "LDH", it is intended to refer to a protein shown in SEQ ID NO: 1.

As LDH-producing bacteria, E. coli BL21 strain was used. First, E. coli BL21 transformed with the recombinant plasmid pKK223-3-LDH was subjected to shaking culture at 180 rpm overnight at 30°C in a small test tube containing 2.5 mL of LB medium (containing 100 µg/mL ampicillin (Amp)) by picking a colony of the strain that had been previously cultured on LB plate medium (containing 100 µg/mL Amp) with a toothpick. This culture solution was subjected to shaking culture at 130 rpm for 24 hours at 30°C in a Sakaguchi flask containing 250 mL of LB medium (containing 100 µg/mL Amp, 0.1 mM isopropyl β-thiogalactopyranoside (hereinafter referred to as "IPTG")). After completion of the culture, the culture solution was centrifuged at 8500 rpm for 5 minutes at 4°C, the supernatant was removed, and bacterial cells were recovered. Subsequently, the resulting bacterial cells were suspended in 30 mL of a 150 mM potassium phosphate buffer (pH 6.5). The above-mentioned microbial cell suspension was ultrasonically homogenized until the suspension became translucent using an ultrasonic homogenizer US-150E (manufactured by NIHONSEIKI KAISHA LTD.), followed by a heat treatment at 50°C for 20 minutes to denature contaminant proteins. The treated liquid was centrifuged at 8500 rpm for 5 minutes at 4°C to recover a supernatant. The obtained supernatant was purified with AKTA Avant 25 (manufactured by Cytiva). First, 5 mL of Q Sepharose Fast Flow resin (manufactured by Cytiva) equilibrated with a 20 mM potassium phosphate buffer (pH 7.0) was used, and the sample was applied to the resin for adsorption. Then, proteins not adsorbed to the resin were eluted with a 20 mM potassium phosphate buffer containing 200 mM sodium chloride. Subsequently, the adsorbed LDH was eluted using a 20 mM potassium phosphate buffer (pH 7.0) containing 350 mM sodium chloride. The obtained LDH was recovered, and the enzyme solution was replaced with a 20 mM potassium phosphate buffer (pH 7.0) containing 200 mM sodium chloride, and then LDH was re-adsorbed to 5 mL of Q Sepharose Fast Flow resin equilibrated with the buffer. Subsequently, the NaCl concentration was gradually increased with a gradient up to 350 mM NaCl/20 mM potassium phosphate buffer (pH 7.0) to elute and recover LDH adsorbed to the resin. The obtained fraction was exchanged with a 10 mM potassium phosphate buffer (pH 6.5). This LDH solution was analyzed by SDS-PAGE to verify that the LDH solution was purified to such an extent that no other contaminating proteins are contained, and used as a purified sample of LDH (purified LDH).

In order to crosslink thionine molecules, glutaraldehyde at a final concentration of 20 mM and thionine acetate at a final concentration of 20 mM were allowed to react in a 10 mM potassium phosphate buffer (pH 6.5) at 45°C for 1 hour. The reaction liquid was diluted twofold with a 10 mM potassium phosphate buffer (pH 6.5), and a 4 µL portion of the diluted solution was applied onto a working electrode of SCREEN-PRINTED ELECTRODES (DRP-C110 manufactured by Metrohm Corporation) and dried. After drying, washing was performed with ultrapure water to remove thionine that was not fixed to the working electrode. Subsequently, purified LDH at a final concentration of 3.8 mg/mL, polylysine at a final concentration of 0.1% (w/v), and polyethylene glycol diglycidyl ether (PEGDGE, Mn: 6000) at a final concentration of 1% (w/v) were mixed in a 10 mM potassium phosphate buffer solution (pH 6.5), and a 10 µL portion of the mixture was applied onto the working electrode to perform immobilization. Subsequently, a 10 µL portion of a 0.1% (w/v) sodium polyacrylate solution was applied onto the working electrode and dried. Subsequently, the printed electrode was immersed in poly-4-vinylpyridine dissolved in ethanol and pulled up and dried, and thereafter the printed electrode was immersed again and pulled up to form a protective film layer, thereby fabricating an LDH electrode of Example 2-1 including a working electrode, a reaction layer, and a protective film layer.

### Example 2-2

An LDH electrode of Example 2-2 was fabricated in the same manner as in Example 2-1 except that the thionine was replaced with acriflavine as the mediator.

### Example 2-3

An LDH electrode of Example 2-3 was fabricated in the same manner as in Example 2-1 except that the thionine was replaced with 2,3-diaminophenazine as the mediator.

### Comparative Example 2-1

An LDH electrode of Comparative Example 2-1 was fabricated in the same manner as in Example 2-1 except that 4 µL of a thionine acetate solution (10 mM) was applied onto the working electrode of the printed electrode and dried without crosslinking thionine molecules.

### Comparative Example 2-2

An LDH electrode of Comparative Example 2-2 was fabricated in the same manner as in Example 2-2 except that 4 µL of an acriflavine solution (10 mM) was applied onto the working electrode of the printed electrode and dried without crosslinking acriflavine molecules.

### Comparative Example 2-3

An LDH electrode of Comparative Example 2-3 was fabricated in the same manner as in Example 2-3 except that 4 µL of a 2,3-diaminophenazine solution (10 mM) was applied onto the working electrode of the printed electrode and dried without crosslinking 2,3-diaminophenazine molecules.

### [Evaluation of Enzyme Electrodes (LDH Electrodes) Formed Using Various Mediators]

The effect of preventing detachment from the electrode surface was evaluated by electrochemical measurement using the LDH electrodes of Examples 2-1 to 2-3 and Comparative Examples 2-1 to 2-3. Specifically, chronoamperometry measurement was performed using the LDH electrode, and the determination coefficient (R² value) between the sodium lactate concentration and the response current value was calculated. Addition was performed so that the sodium lactate concentration was 0, 2, 4, 6, 8, 10,12,14, or 16 mM. When the mediator is sufficiently present on the working electrode, the response current value is proportional to the lactic acid concentration, and thus the R² value becomes a value close to 1. On the other hand, when the mediator is detached and is not sufficiently present on the working electrode, the current value is saturated at a certain lactic acid concentration, and thus the R² value becomes a value far from 1. The LDH electrodes of Examples 2-1 to 2-3 and Comparative Examples 2-1 to 2-3 were stored in a PBS solution at 37°C for 4 days, then R² values were calculated, and the R² values were compared to evaluate the effect of preventing detachment from the electrode surface. In the chronoamperometry measurement, the printed electrode was connected to a high sensitivity potentiostat analyzer ECstat-400 (manufactured by EC FRONTIER CO., LTD.) using a dedicated connector (DRP-CAC manufactured by Drop Sense). The measurement was performed in a three-electrode system using a printed electrode as the working electrode, platinum as the counter electrode, and a silver-silver chloride electrode as the reference electrode, and a 100 mM potassium phosphate buffer (pH 7.5) was used as a buffer. Then, the applied voltage was set to +100 mV (vs. Ag/AgCl). Specifically, sodium lactate was added every 60 seconds from 120 seconds after the start of measurement so that the concentration became 0 to 16 mM, and the current response value was continuously measured. The results are shown in Table 1.

**[Table 1]**

| | Mediator | Crosslinking agent | R² value |
|---|---|---|---|
| Exam. 2-1 | Thionine | Glutaraldehyde | 0.9972 |
| Comp. Exam. 2-1 | Thionine | None | 0.9786 |
| Exam. 2-2 | Acriflavine | Glutaraldehyde | 0.9972 |
| Comp. Exam. 2-2 | Acriflavine | None | 0.9764 |
| Exam. 2-3 | 2,3-Diaminophenazine | Glutaraldehyde | 0.9972 |
| Comp. Exam. 2-3 | 2,3-Diaminophenazine | None | 0.9916 |

When the mediator and the crosslinked mediator were compared, the LDH electrodes of Examples formed using the crosslinked mediator had an R² value closer to 1 as compared with the LDH electrodes of Comparative Examples formed without using the crosslinked mediator. From this, it was verified that detachment of the mediator was prevented by crosslinking the mediator. In addition, it was also found that the effect of preventing detachment from the electrode surface tends not to greatly depend on the type of mediator in the crosslinked mediator.

### [Fabrication of Enzyme Electrodes (LDH Electrodes) Formed Using Various Crosslinking Agents]

### Example 3-1

An LDH electrode of Example 3-1 including a working electrode, a reaction layer, and a protective film layer was fabricated in the same manner as in Example 2-1 except that glutaraldehyde at a final concentration of 20 mM was replaced with ethylene glycol diglycidyl ether at a final concentration of 20 mM.

### Example 3-2

An LDH electrode of Example 3-2 including a working electrode, a reaction layer, and a protective film layer was fabricated in the same manner as in Example 2-1 except that the glutaraldehyde at a final concentration of 20 mM was replaced with suberic acid bis(3-sulfo-N-hydroxysuccinimide ester) sodium salt (BS3) at a final concentration of 20 mM.

### [Evaluation of Enzyme Electrodes (LDH Electrodes) Formed Using Various Crosslinking Agents]

The effect of preventing detachment from the electrode surface was evaluated by electrochemical measurement (chronoamperometry measurement) using the LDH electrodes of Examples 3-1 and 3-2. The chronoamperometry measurement was performed in the same manner as in Example 2-1 except that each of the LDH electrodes of Examples 3-1 and 3-2 was used in place of the LDH electrode of Example 2-1. The results are shown in Table 2. Table 2 also shows the results of Example 2-1.

**[Table 2]**

| | Mediator | Crosslinking agent | R² value |
|---|---|---|---|
| Exam. 2-1 | Thionine | Glutaraldehyde | 0.9972 |
| Exam. 3-1 | Thionine | Ethylene glycol diglycidyl ether | 0.9965 |
| Exam. 3-2 | Thionine | BS3 | 0.9986 |

The LDH electrode of Example 3-1 formed using ethylene glycol diglycidyl ether as a crosslinking agent and the LDH electrode of Example 3-2 formed using BS3 had approximately the same R² value as the LDH electrode of Example 2-1 formed using glutaraldehyde. From this, it was verified that detachment of the mediator of the LDH electrodes of Example 3-1 and Example 3-2 was prevented. In addition, it was also found that the effect of preventing detachment from the electrode surface tends not to greatly depend on the type of crosslinking agent in the crosslinked mediator.

### [Fabrication of Enzyme Electrodes (LDH Electrodes) Formed Using Various Crosslinking Agents Having Different Molecular Lengths]

### Example 4-1

An LDH electrode of Example 4-1 including a working electrode, a reaction layer, and a protective film layer was fabricated in the same manner as in Example 2-1 except that the glutaraldehyde at a final concentration of 20 mM was replaced with ethylene glycol diglycidyl ether (molecular weight: 218) at a final concentration of 20 mM. The LDH electrode of Example 4-1 is an electrode similar to the LDH electrode of Example 3-1.

### Example 4-2

An LDH electrode of Example 4-2 including a working electrode, a reaction layer, and a protective film layer was fabricated in the same manner as in Example 2-1 except that glutaraldehyde at a final concentration of 20 mM was replaced with polyethylene glycol diglycidyl ether (PEGDGE (Mn: 500)) at a final concentration of 20 mM.

### Example 4-3

An LDH electrode of Example 4-3 including a working electrode, a reaction layer, and a protective film layer was fabricated in the same manner as in Example 2-1 except that glutaraldehyde at a final concentration of 20 mM was replaced with polyethylene glycol diglycidyl ether (PEGDGE (Mn: 6000)) at a final concentration of 20 mM.

### Comparative Example 4-1

An LDH electrode of Comparative Example 4-1 was fabricated in the same manner as in Example 2-1 except that 4 µL of a thionine acetate solution (10 mM) was applied onto the working electrode of the printed electrode and dried without crosslinking thionine molecules. The LDH electrode of Comparative Example 4-1 is an electrode similar to the LDH electrode of Comparative Example 2-1.

### [Evaluation of Enzyme Electrodes (LDH Electrodes) Formed Using Various Crosslinking Agents Having Different Molecular Lengths]

The effect of preventing detachment from the electrode surface was evaluated by electrochemical measurement (chronoamperometry measurement) using the LDH electrodes of Examples 4-1 to 4-3 and Comparative Example 2-1. The chronoamperometry measurement was performed in the same manner as in Example 2-1, except that the LDH electrodes of Examples 4-1 to 4-3 and Comparative Example 2-1, which were prepared on the day of fabrication and not stored in PBS solution at 37°C for 4 days, were used instead of the LDH electrode of Example 2-1. The results are shown in Table 3.

**[Table 3]**

| | Mediator | Crosslinking agent | R² value |
|---|---|---|---|
| Exam. 2-1 | Thionine | Glutaraldehyde | 0.9972 |
| Comp. Exam. 2-1 | Thionine | None | 0.9786 |
| Exam. 2-2 | Acriflavine | Glutaraldehyde | 0.9972 |
| Comp. Exam. 2-2 | Acriflavine | None | 0.9764 |
| Exam. 2-3 | 2,3-Diaminophenazine | Glutaraldehyde | 0.9972 |
| Comp. Exam. 2-3 | 2,3-Diaminophenazine | None | 0.9916 |

The LDH electrodes of Examples formed using the crosslinked mediators with various crosslinking agents having different molecular lengths had an R² value closer to 1 as compared with the LDH electrode of Comparative Example formed without using the crosslinked mediator. From this, it was verified that detachment of the mediator was prevented by crosslinking the mediator. In addition, it was also found that the effect of preventing detachment from the electrode surface tends not to greatly depend on the molecular length of the crosslinking agent in the crosslinked mediator.

### [Synthesis of Crosslinked Mediator]

### Synthesis Example 1

In order to crosslink thionine molecules, glutaraldehyde at a final concentration of 20 mM and thionine acetate at a final concentration of 20 mM were allowed to react in a 10 mM potassium phosphate buffer (pH 6.5) at 45°C for 1 hour to prepare a reaction liquid containing a crosslinked mediator of Synthesis Example 1.

### Synthesis Example 2

A reaction liquid containing a crosslinked mediator of Synthesis Example 2 was prepared in the same manner as in Synthesis Example 1 except that glutaraldehyde at a final concentration of 20 mM and thionine acetate at a final concentration of 20 mM were replaced with glutaraldehyde at a final concentration of 77 mM and thionine acetate at a final concentration of 6 mM, and the heating temperature was changed to 60°C.

### Synthesis Example 3

A reaction liquid containing a crosslinked mediator of Synthesis Example 3 was prepared in the same manner as in Synthesis Example 1 except that glutaraldehyde at a final concentration of 20 mM and thionine acetate at a final concentration of 20 mM were replaced with glutaraldehyde at a final concentration of 160 mM and thionine acetate at a final concentration of 20 mM, and methanol was added so that the final concentration was 20 mass%.

### [Maximum Molecular Weight of Crosslinked Mediator]

With respect to the reaction liquids containing the crosslinked mediator of Synthesis Example 1, Synthesis Example 2, and Synthesis Example 3, the molecular weight (number average molecular weight) was measured. The number average molecular weight was measured under the following conditions using gel permeation chromatography (GPC). The molecular weight (number average molecular weight) is a value converted in terms of standard PEG using a calibration curve by polyethylene glycol (PEG) (standard substance). The maximum molecular weight was calculated by an approximation formula (cubic) obtained from the retention time of the peak start and the standard substance. The results are shown in Table 4.
Apparatus: HLC-8420GPC
Column: TSKgel SuperAWM-H (6.0 mm I.D. × 15 cm) (connected in series (two columns)) (manufactured by TOSOH CORPORATION)
Detector: UV detector (λ = 280 nm)
Eluent: DMSO (dimethyl sulfoxide, manufactured by FUJIFILM Wako Pure Chemical Corporation) + 10 mM LiBr (manufactured by FUJIFILM Wako Pure Chemical Corporation)
Flow rate: 0.5 mL/min
Concentration: 1 mg/mL
Injection amount: 20 µL
Column temperature: 40°C

**[Table 4]**

| | Maximum molecular weight |
|---|---|
| Synthesis Exam. 1 | 8.2 × 10³ |
| Synthesis Exam. 2 | 7.6 × 10³ |
| Synthesis Exam. 3 | 1.2 × 10⁴ |

### [Fabrication of Enzyme Electrodes (GDH Electrodes) Formed Using Various Crosslinked Mediators under Different Preparation Conditions]

### Example 5-1

A 3 µL portion of the reaction liquid containing the crosslinked mediator prepared in Synthesis Example 1 was applied onto the working electrode of SCREEN-PRINTED ELECTRODES (DRP-C110 manufactured by Metrohm Corporation) and dried. Subsequently, the working electrode was washed with ultrapure water to remove insufficiently crosslinked thionine. Subsequently, 40 µL of a 10 mg/mL GDH-AD/10 mM potassium phosphate buffer (pH 6.5) and 4 µL of 1 mass% glutaraldehyde were mixed, and a 2.2 µL portion of the mixture was applied to the working electrode and dried. Subsequently, an operation, in which the working electrode is immersed in 7 mass% of poly-4-vinylpyridine/ethanol, and pulled up and dried, was repeated twice to fabricate a GDH electrode of Example 5-1.

### Example 5-2

A GDH electrode of Example 5-2 was fabricated in the same manner as in Example 5-1 except that the reaction liquid containing the crosslinked mediator prepared in Synthesis Example 1 was replaced with the reaction liquid containing the crosslinked mediator prepared in Synthesis Example 2.

### Example 5-3

A GDH electrode of Example 5-3 was fabricated in the same manner as in Example 5-1 except that the reaction liquid containing the crosslinked mediator prepared in Synthesis Example 1 was replaced with the reaction liquid containing the crosslinked mediator prepared in Synthesis Example 3.

### Comparative Example 5-1

A GDH electrode of Comparative Example 5-1 was fabricated in the same manner as in Example 5-1 except that the reaction liquid containing the crosslinked mediator prepared in Synthesis Example 1 was not applied, that is, the crosslinked mediator of Synthesis Example 1 was not used.

### Comparative Example 5-2

A GDH electrode of Comparative Example 5-2 was fabricated in the same manner as in Example 5-1 except that the reaction liquid containing the crosslinked mediator prepared in Synthesis Example 1 was replaced with a solution containing 20 mM thionine acetate.

### [Evaluation of Enzyme Electrodes (GDH Electrodes)]

The effect of preventing detachment from the electrode surface was evaluated by electrochemical measurement. Specifically, chronoamperometry measurement was performed using the GDH electrodes of Example 5-1, Example 5-2, Example 5-3, Comparative Example 5-1, and Comparative Example 5-2, and response current values when glucose was added at a final concentration of 20 mM were compared. In the chronoamperometry measurement, the printed electrode was connected to a high sensitivity potentiostat analyzer ECstat-400 (manufactured by EC FRONTIER CO., LTD.) using a dedicated connector (DRP-CAC manufactured by Drop Sense). The measurement was performed in a three electrode system using a printed electrode as a working electrode, platinum as a counter electrode, and a silver-silver chloride electrode as a reference electrode, and a 100 mM potassium phosphate buffer (pH 7.5) was used as a buffer. Then, the applied voltage was set to +100 mV (vs. Ag/AgCl). Specifically, 120 seconds after the start of measurement, glucose was added so that the concentration became 20 mM, and 720 seconds after the start of measurement, the response current value was measured. The response current value 120 seconds after the start of measurement was used as a reference, and the increase in the response current value 720 seconds after the start of measurement was compared. The results are shown in Table 5. Note that the relative values in Table 5 are relative values when the result of Example 5-1 is taken as 100%.

**[Table 5]**

| | Enzyme | Mediator | Substrate concentration (mM) | Relative value |
|---|---|---|---|---|
| Exam. 5-1 | GDH | Crosslinked mediator (Synthesis Exam. 1) | 20 | 100% |
| Exam. 5-2 | | Crosslinked mediator (Synthesis Exam. 2) | | 492% |
| Exam. 5-3 | | Crosslinked mediator (Synthesis Exam. 3) | | 577% |
| Comp. Exam. 5-1 | | None | | 22% |
| Comp. Exam. 5-2 | | Thionine | | 72% |

The GDH electrodes of Examples formed using each crosslinked mediator under different preparation conditions had a larger relative value than the GDH electrodes of Comparative Examples formed without using the crosslinked mediator. From this, it was verified that detachment of the mediator was prevented by crosslinking the mediator. The GDH electrode of Comparative Example 1 did not reach an equilibrium state 120 seconds after the start of measurement, and the response current value did not increase at all even when glucose was added.

### [Fabrication of LOX Electrodes Using Lactate Oxidase (LOX)] Example 6-1

A 2 µL portion of the reaction liquid containing the crosslinked mediator prepared in Synthesis Example 1 was applied onto the working electrode of SCREEN-PRINTED ELECTRODES (DRP-C110 manufactured by Metrohm Corporation) and dried, followed by washing with ultrapure water. A mixture of 15 µL of 20 mg/mL LOX (lactate oxidase, manufactured by Asahi Kasei Pharma Corporation)/10 mM potassium phosphate buffer (pH 7.5) and 3 µL of BIOSURFINE-AWP-MRH (manufactured by Toyo Gosei Co., Ltd.) was prepared, and a 3 µL portion of the mixture was applied to the working electrode and dried. Further, the enzymes were crosslinked by irradiation with an ultraviolet ray at 365 nm for 10 minutes to fabricate an LOX electrode of Example 6-1.

### Comparative Example 6-1

An LOX electrode of Comparative Example 6-1 was fabricated in the same manner as in Example 6-1 except that the reaction liquid containing the crosslinked mediator prepared in Synthesis Example 1 was not applied, that is, the crosslinked mediator of Synthesis Example 1 was not used.

### Comparative Example 6-2

An LOX electrode of Comparative Example 6-2 was fabricated in the same manner as in Example 6-1 except that the reaction liquid containing the crosslinked mediator prepared in Synthesis Example 1 was replaced with a solution containing 20 mM thionine acetate.

### [Evaluation of Enzyme Electrodes (LOX Electrodes)]

The effect of suppressing detachment from the electrode surface was evaluated by electrochemical measurement. Specifically, chronoamperometry measurement was performed using the LOX electrodes of Example 6-1, Comparative Example 6-1, and Comparative Example 6-2, and response current values when sodium lactate was added at a final concentration of 1.6 mM were compared. The chronoamperometry measurement was performed in the same manner as in the evaluation of the enzyme electrodes (GDH electrodes) described above. Specifically, 120 seconds after the start of measurement, sodium lactate was added at a final concentration of 1.6 mM, and 360 seconds after the start of measurement, the response current value was measured. The response current value 120 seconds after the start of measurement was used as a reference, and the increase in the response current value 360 seconds after the start of measurement was compared. The results are shown in Table 6. Note that the relative values in Table 6 are relative values when the result of Example 6-1 is taken as 100%.

**[Table 6]**

| | Enzyme | Mediator | Substrate concentration (mM) | Relative value |
|---|---|---|---|---|
| Exam. 6-1 | LOX | Crosslinked mediator (Synthesis Exam. 1) | 1.6 | 100% |
| Comp. Exam. 6-1 | | None | | 0.2% |
| Comp. Exam. 6-2 | | Thionine | | 1.0% |

The LOX electrodes of Examples had a larger relative value than the LOX electrodes of Comparative Examples formed without using the crosslinked mediator. From this, it was verified that detachment of the mediator was prevented by crosslinking the mediator.

### [Fabrication of NOX Electrodes Using NADH Oxidase (NOX)]

### Example 7-1

An NOX electrode of Example 7-1 was fabricated in the same manner as in Example 6-1 except that the mixture of 15 µL of 20 mg/mL LOX (manufactured by Asahi Kasei Pharma Corporation)/10 mM potassium phosphate buffer (pH 7.5) and 3 µL of BIOSURFINE-AWP-MRH (manufactured by Toyo Gosei Co., Ltd.) was replaced with a mixture of 50 µL of 15 U/mL NOX (NADH oxidase, Sigma-Aldrich) and 5 µL of a 1 mM FAD (flavin adenine dinucleotide) solution.

### Comparative Example 7-1

An NOX electrode of Comparative Example 7-1 was fabricated in the same manner as in Example 7-1 except that the reaction liquid containing the crosslinked mediator prepared in Synthesis Example 1 was not applied, that is, the crosslinked mediator of Synthesis Example 1 was not used.

### Comparative Example 7-2

An NOX electrode of Comparative Example 7-2 was fabricated in the same manner as in Example 7-1 except that the reaction liquid containing the crosslinked mediator prepared in Synthesis Example 1 was replaced with a solution containing 20 mM of thionine acetate.

### [Evaluation of Enzyme Electrodes (NOX Electrodes)]

The effect of suppressing detachment from the electrode surface was evaluated by electrochemical measurement. Specifically, chronoamperometry measurement was performed using the NOX electrodes of Example 7-1, Comparative Example 7-1, and Comparative Example 7-2, and response current values when NADH (nicotinamide adenine dinucleotide) was added so that the final concentration became 0.24 mM were compared. The chronoamperometry measurement was performed in the same manner as in the evaluation of the enzyme electrodes (GDH electrodes) described above. Specifically, 120 seconds after the start of measurement, NADH was added so that the final concentration became 0.24 mM, and 360 seconds after the start of measurement, the response current value was measured. The response current value 120 seconds after the start of measurement was used as a reference, and the increase in the response current value 360 seconds after the start of measurement was compared. The results are shown in Table 7. Note that the relative values in Table 7 are relative values when the result of Example 7-1 is taken as 100%.

**[Table 7]**

| | Enzyme | Mediator | Substrate concentration (mM) | Relative value |
|---|---|---|---|---|
| Exam. 7-1 | NOX | Crosslinked mediator (Synthesis Exam. 1) | 0.24 | 100% |
| Comp. Exam. 7-1 | | None | | 5.4% |
| Comp. Exam. 7-2 | | Thionine | | 58.6% |

The NOX electrodes of Examples had a larger relative value than the NOX electrodes of Comparative Examples formed without using the crosslinked mediator. From this, it was verified that detachment of the mediator was prevented by crosslinking the mediator.

## Claims

1. A method for manufacturing an enzyme electrode, comprising:
preparing a multilayer body including an electrode and a mediator layer provided on a surface of the electrode and containing a mediator crosslinked by a crosslinking agent; and
forming a reaction layer by adding a solution containing an enzyme to the mediator layer of the multilayer body.

2. The method for manufacturing an enzyme electrode according to claim 1, wherein
the multilayer body is a multilayer body fabricated by disposing a mediator crosslinked by the crosslinking agent synthesized in advance on a surface of the electrode.

3. The method for manufacturing an enzyme electrode according to claim 1 or 2, wherein
the mediator is a compound having two or more amino groups in one molecule.

4. The method for manufacturing an enzyme electrode according to claim 3, wherein
the crosslinking agent is a compound having two or more reactive groups having reactivity with the amino groups in one molecule.

5. An enzyme electrode, comprising:
an electrode; and
a reaction layer provided on a surface of the electrode, wherein
the reaction layer contains an enzyme and a mediator crosslinked by a crosslinking agent.

6. The enzyme electrode according to claim 5, wherein
the mediator is a compound having two or more amino groups in one molecule.

7. The enzyme electrode according to claim 6, wherein
the crosslinking agent is a compound having two or more reactive groups having reactivity with the amino groups in one molecule.

8. An enzyme sensor, comprising:
the enzyme electrode according to any one of claims 5 to 7 as a working electrode.
